# EUROPÄISCHE PATENTSCHRIFT

(11) **EP 1 527 285 B1**
(45) Veröffentlichungstag und Bekanntmachung des Hinweises auf die Patenterteilung: **19.04.2006**
(21) Anmeldenummer: 03784177.2
(22) Anmeldetag: 05.08.2003
(51) Int. Cl.: F16C 33/10, F16C 33/02, F04B 1/20, B05D 5/08

(54) **GLEITSCHUH UND VERFAHREN ZUM AUSBILDEN VON UNTERTEILUNGEN AN EINER GLEITEBENE EINES GLEITSCHUHS**
GUIDE BLOCK AND METHOD FOR EMBODYING DIVISIONS ON A SLIDE PLANE OF A GUIDE BLOCK
PATIN DE GUIDAGE ET PROCEDE POUR FORMER LES SUBDIVISIONS D'UN PLAN DE GLISSEMENT D'UN PATIN DE GUIDAGE

(30) Priorität: 05.08.2002 DE 10235813
(43) Veröffentlichungstag der Anmeldung: 04.05.2005
(73) Patentinhaber: Brueninghaus Hydromatik GmbH, 89275 Elchingen (DE)
(72) Erfinder: DONDERS, Steven, 72401 Haigerloch (DE)
(74) Vertreter: Körfer, Thomas
(86) Internationale Anmeldenummer: PCT/EP2003/008650
(87) Internationale Veröffentlichungsnummer: WO 2004/015286

(56) Entgegenhaltungen:
- DE-A- 4 301 123
- DE-A- 19 601 721
- GB-A- 1 035 216
- US-A- 5 198 637
- PATENT ABSTRACTS OF JAPAN Bd. 0161, Nr. 03 (M-1221), 13. März 1992 (1992-03-13) & JP 3 277816 A (ISUZU MOTORS LTD), 9. Dezember 1991 (1991-12-09)

## Beschreibung

Die Erfindung betrifft einen Gleitschuh und ein Verfahren zum Ausbilden von Unterteilungen an einer Gleitebene eines Gleitschuhs.

Zum Erzeugen der Hubbewegung von Kolben in hydrostatischen Kolbenmaschinen sind die Kolben mittels eines Gleitschuhs auf einer Gleitfläche, beispielsweise einer Schrägscheibe, abgestützt. Die Schrägscheibe ist dabei drehfest mit dem Gehäuse der Kolbenmaschine verbunden. Dadurch kommt es zu einer Relativbewegung zwischen den Gleitschuhen und der Schrägscheibe. Da die Gleitschuhe großen mechanischen Belastungen ausgesetzt sind, müssen sie aus einem mechanisch ausreichend festen Material gefertigt werden. Mechanisch hochfeste Materialien weisen aber im Regelfall auch einen hohen Reibungskoeffizienten im Zusammenspiel mit der Schrägscheibe auf.

Aus der DE 196 01 721 A1 ist bekannt, diese Reibung zwischen der Gleitfläche der Schrägscheibe und der Gleitsohle des Gleitschuhs dadurch zu verringern, dass in die Gleitsohle ein Gleitteil eingesetzt wird. Das Gleitteil ist aus einem Material gefertigt, welches selbst beim Ausbleiben einer Schmierung eine ausreichende Restgleitfähigkeit auf der Schrägscheibe sicherstellt. An der Gleitsohle sind zudem mehrere Unterteilungen angeordnet, mit deren Hilfe ein Druckmittelpolster aufgebaut wird, so dass während des Betriebs der hydrostatischen Kolbenmaschine der Gleitschuh auf einem hydrostatischen Gleitlager läuft. Die Unterteilungen bilden hierzu auf der Gleitsohle eine Art Labyrinth aus, das für ein gleichmäßiges Polster aus dem Druckmittel sorgt, welches durch eine Druckölbohrung zugeführt wird. Durch diese hydrostatische Entlastung wird der reibungsbedingte Verschleiß deutlich verringert.

Bei dem aus der DE 196 01 721 A1 bekannten Gleitschuh ist nachteilig, dass mehrere Bearbeitungsvorgänge erforderlich sind, die spanende Verfahren erfordern. Neben dem hohen Materialaufwand werden dadurch die Bearbeitungszeiten deutlich verlängert. Zudem kann durch Grate, die bei der Bearbeitung entstehen, ein erhöhter Verschleiß bei der Inbetriebnahme der Kolbenmaschine entstehen.

Weiterhin ist es aus der DE 43 01 123 A1 bekannt, einen Stützkörper eines Gleitschuhs mit einer reibungsvermindernden Schicht zu überziehen. Die reibungsvermindernde Schicht besteht dabei vorzugsweise aus Kunststoff und umschließt den Gleitschuhstützkörper vollständig. Zur Fixierung der reibungsvermindernden Schicht an dem Stützkörper wird damit eine formschlüssige Verbindung zwischen dem Stützkörper und der reibungsvermindernden Schicht ausgebildet.

Der Erfindung liegt die Aufgabe zugrunde, ein Verfahren zur Ausbildung von Unterteilungen und einen entsprechenden Gleitschuh zu schaffen, bei dem ein geringer Materialeinsatz sowie eine kurze Bearbeitungszeit erforderlich sind.

Die Aufgabe wird durch das erfindungsgemäße Verfahren mit den Verfahrensschritten gemäß Anspruch 1 sowie den erfindungsgemäßen Gleitschuh nach Anspruch 18 gelöst.

Bei dem erfindungsgemäßen Verfahren wird, das Material, aus welchem die Unterteilungen zu fertigen sind, durch ein berührungsfreies Verfahren fest mit einem Gleitschuhrohling verbunden. Das Erzeugen der Verbindung erfolgt dabei mittels eines Wärmeeintrags. Durch den Wärmeeintrag wird das zuvor zugeführte Material aufgeschmolzen und damit dauerhaft als Löt- oder Schweißverbindung auf dem Gleitschuhrohling fixiert.

Durch die berührungsfrei eingebrachte Wärme kann auch mit einfachen Mitteln eine komplexe Geometrie der Unterteilungen erzeugt werden. Anders als beim spanenden Herausarbeiten der Unterteilungen sind die Grenzen der denkbaren Geometrien nicht durch die Abmessungen des spanabhebenden Werkzeugs sowie dessen Vorschubgeschwindigkeit begrenzt. Der kleine Strahldurchmesser eines Laserstrahls oder eines Elektronenstrahls etwa ermöglicht auch besonders enge Radien. Zudem ist es möglich, das erfindungsgemäße Verfahren zum Aufbringen der Unterteilungen in den Produktionsprozess des Gleitschuhs zu integrieren. Der hohe logistische Aufwand, den die spanende Bearbeitung und die mehrteilige Ausführung bisheriger Gleitschuhe erfordert, entfallen. Dadurch reduzieren sich nicht nur die unmittelbaren Produktionskosten, sondern auch die Lagerhaltungskosten.

Durch die in den Unteransprüchen aufgeführten Maßnahmen sind vorteilhafte Weiterbildungen des erfindungsgemäßen Verfahrens möglich.

Insbesondere ist es vorteilhaft, das aufzubringende Material als Pulver zuzuführen, welches dann z. B. mittels eines Laserstrahls auf den Gleitschuhrohling aufgeschmolzen wird. Gemäß einer weiteren erfindungsgemäßen Weiterbildung wird das überschüssige Material nach dem Ausbilden der Unterteilungen von dem Gleitschuhrohling abgeblasen. Der so wiedergewonnene Werkstoff kann dem Herstellungsprozess evtl. wieder zugeführt werden.

Ein weiterer Vorteil ist, dass ohne einen Werkzeugwechsel nicht nur die Gleitsohle des Gleitschuhs mit Unterteilungen versehen werden kann, sondern auch eine entgegengesetzt orientierte Ringfläche, an der eine Gleitreibung zwischen dem Gleitschuh und einer Rückzugplatte auftritt.

Durch die Verwendung eines Prozesses, bei dem ein berührungsfreier Wärmeeintrag stattfindet, wird der gesamte Temperatureintrag in das Werkstück niedrig gehalten, da keine Wärmeleitung durch das Material erforderlich ist. Dadurch ist es auch möglich, an Randbereichen des Gleitschuhs Material aufzubringen, ohne dass ein Verzug des Materials auftritt. Ferner wird eine Wärmebehandlung des Gleitschuhrohlings zum Erreichen höherer Materialfestigkeit nicht durch einen großen Wärmeeintrag wieder aufgehoben.

Das Zuführen des Materials mittels einer Wickelvorrichtung hat darüber hinaus den Vorteil, dass das Restmaterial nach Ende des Prozesses wieder auf eine Spule oder Rolle aufgewickelt ist, und ein Reinigungsprozess der Bearbeitungsstation nicht erforderlich ist. Ferner kann die Spule oder Rolle, die das verbrauchte Material enthält, evtl. wieder einem Recyclingprozeß zugeführt werden.

Das erfindungsgemäße Verfahren ist in der Zeichnung dargestellt und wird anhand der nachfolgenden Beschreibung näher erläutert. Es zeigen:
- Fig. 1: eine schematische Darstellung einer Axialkolbenmaschine;
- Fig. 2: eine vergrößerte Darstellung im Ausschnitt II der Fig. 1;
- Fig. 3: eine Ansicht einer Gleitschuhsohle mit mehreren Unterteilungen;
- Fig. 4: eine schematische Darstellung eines ersten Beispiels des erfindungsgemäßen Verfahrens;
- Fig. 5: eine schematische Darstellung eines zweiten Beispiels des erfindungsgemäßen Verfahrens;
- Fig. 6: eine schematische Darstellung eines dritten Beispiels des erfindungsgemäßen Verfahrens;
- Fig. 7: eine schematische Darstellung des dritten Beispiels des erfindungsgemäßen Verfahrens aus einer zweiten Perspektive;
- Fig. 8: eine schematische Darstellung zweier Geometrien für Unterteilungen auf einer Ringfläche des Gleitschuhs; und
- Fig. 9: eine schematische Darstellung eines vierten Beispiels des erfindungsgemäßen Verfahrens.

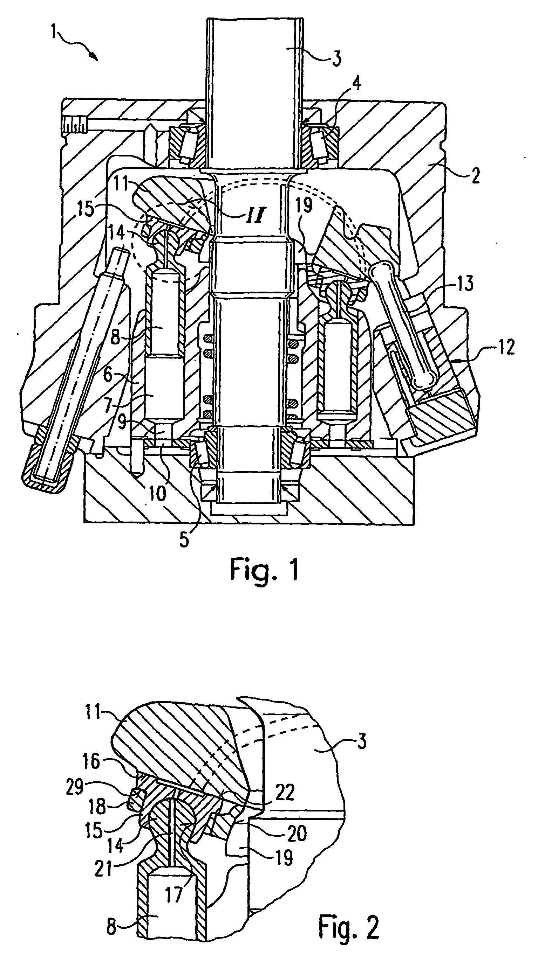

Zum besseren Verständnis der Erfindung soll zunächst anhand von Fig. 1 der Aufbau der wesentlichen Bauteile einer Axialkolbenmaschine 1 erläutert werden. Die Axialkolbenmaschine 1 weist ein Gehäuse 2 auf, in dessen Inneren eine Welle 3 drehbar gelagert ist. Zur Lagerung der Welle dienen ein Lager 4 sowie ein am entgegengesetzten Ende der Welle 3 angeordnetes weiteres Lager 5. Mit der Welle 3 ist eine Zylindertrommel 6 drehfest verbunden. In die Zylindertrommel 6 sind gleichmäßig über den Umfang verteilt mehrere Zylinderbohrungen 7 eingebracht. Die Zylinderbohrungen 7 dienen der Aufnahme von Kolben 8. Die Kolben 8 sind in den Zylinderbohrungen 7 längsverschieblich angeordnet.

Beim Ausführen einer Hubbewegung wird im Falle, dass die Axialkolbenmaschine als eine Hydropumpe betrieben wird, während eines Druckhubs Druckmittel aus den Zylinderbohrungen 7 durch Zylinderöffnungen 9 in eine Steuerniere 10 gedrückt. Die Steuerniere 10 ist in nicht dargestellter Weise mit einer Arbeitsleitung verbunden. Zum Erzeugen der Hubbewegung der Kolben 8 dient eine Schrägscheibe 11. Der Winkel der Schrägscheibe 11 relativ zu der Welle 3 ist über eine Verstellvorrichtung 12 einstellbar, indem ein Stellkolben 13 die Schrägscheibe 11 entsprechend mit einer Kraft beauftragt und somit verstellt.

Die Kolben 8 weisen an ihrem von der Zylinderöffnung 9 abgewandten Ende einen kugelförmigen Kopf 14 auf. Der kugelförmige Kopf 14 ist mit einem Gleitschuh 15 verbunden, der sich an der Schrägscheibe 11 abgestützt. Das Zusammenspiel zwischen der Schrägscheibe 11, den Kolben 8 und den Gleitschuhen 15 wird anhand der Ausschnittvergrößerung in Fig. 2 ausführlich erläutert.

Der Gleitschuh 15 stützt sich auf einer Gleitfläche 16 der Schrägscheibe 11 ab, wobei die Gleitfläche 16 bei einer Drehung der Zylindertrommel 6 von dem Gleitschuh 15 entlang einer Kreisbahn überstrichen wird. Während eines Druckhubs wird der Gleitschuh 15 auf Grund des in der Zylinderbohrung 7 herrschenden Drucks in Anlage zu der Schrägscheibe 11 gehalten, so dass sich eine Gleitsohle 22 des Gleitschuhs 15 in Anlage mit der Gleitfläche 16 der Schrägscheibe 11 befindet. Um auch bei einem Saughub die Anlage des Gleitschuhs 15 an der Schrägscheibe 11 zu gewährleisten, ist eine Rückzugplatte 18 vorgesehen. Die Rückzugplatte 18 hält während des Saughubs den Gleitschuh 15 durch Anlage an einer Ringfläche 29, die entgegengesetzt zu der Gleitsohle 22 orientiert ist, fest. Um einen konstanten Abstand der Rückzugplatte 18 zu der Gleitfläche 16 der Schrägscheibe 11 sicherzustellen, stützt sich die Rückzugplatte 18 an einem Gegenlager 19 ab.

Das Gegenlager 19 weist eine kalottenförmige Außenkontur auf, auf der die Rückzugplatte 18 bei einer Stellbewegung der Schrägscheibe 11 gleitet und so der Stellbewegung durch Drehung folgen kann. Durch die Ausformung eines kugelförmigen Kopfs 14 an dem Kolben 8 sowie einer korrespondierenden kugelförmigen Ausnehmung 17 an dem Gleitschuh 15 sind sowohl Zug- als auch Druckkräfte zwischen den Kolben 8 übertragbar. Zur Verminderung der Reibung zwischen dem kugelförmigen Kopf 14 und der kugelförmigen Ausnehmung 17 ist eine Schmierölbohrung 21 vorgesehen, durch welche die Kontaktfläche zwischen dem Gleitschuh 15 und dem kugelförmigen Kopf 14 aus der Zylinderbohrung 7 mit Schmiermittel versorgt wird. Weiterhin ist in dem Gleitschuh 15 eine Durchgangsbohrung vorgesehen, welche das Druckmittel zur Gleitsohle 22 des Gleitschuhs 15 transportiert.

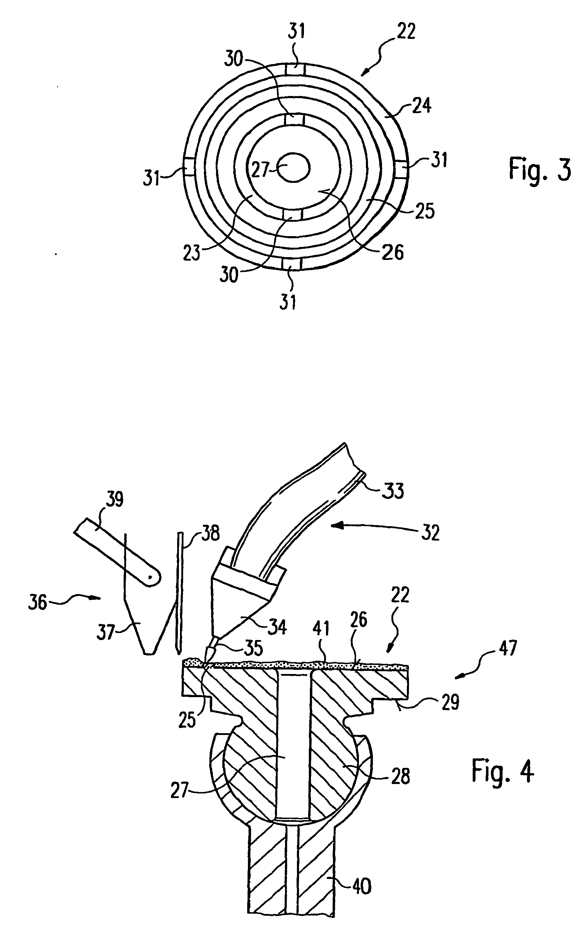

In Fig. 3 ist eine Aufsicht auf eine Gleitsohle 22 dargestellt. Die Gleitsohle 22 weist eine Basisfläche 26 auf, auf der mehrere Unterteilungen angeordnet sind. Die Unterteilungen sind in Form von kreisförmigen Stegen ausgebildet, wobei zwischen Tragstegen und Dichtstegen zu unterscheiden ist.

Wie vorstehend bereits bei der Erläuterung der Fig. 2 ausgeführt wurde, ist in den Gleitschuhen 15 eine Durchgangsbohrung 27 vorgesehen, durch welche während des Druckhubs Druckmittel in Richtung der Gleitsohle 22 gedrückt wird. Das aus der Durchgangsbohrung 27 austretende Druckmittel verteilt sich zunächst bis zu einem ersten Tragsteg 23, welcher als Erhebung auf der Basisfläche 26 ausgebildet ist. Der erste Tragsteg 23 ist kreisförmig ausgebildet und weist zwei Öldurchlässe 30 auf, wobei die beiden Öldurchlässe 30 diametral als Vertiefungen in dem ersten Tragsteg 23 ausgebildet sind. Das über die Öldurchlässe 30 austretende Druckmittel wird durch einen Dichtsteg 25, der ebenfalls als Erhebung auf der Basisfläche 26 ausgebildet ist, daran gehindert, schnell in radialer Richtung wegzufließen. Im Gegensatz zu dem ersten Tragsteg 23 weist der Dichtsteg 25 keinen Öldurchlass auf.

Im dargestellten Ausführungsbeispiel der Fig. 3 sind der erste Tragsteg 23, der Dichtsteg 25 sowie ein zweiter Tragsteg 24 konzentrisch zueinander angeordnet. Der Durchmesser des ersten Tragstegs 23, des Dichtstegs 25 sowie des zweiten Tragstegs 24 nimmt dabei kontinuierlich zu. In dem zweiten Tragsteg 24 sind weitere Öldurchlässe 31 ausgebildet. Die abgebildete Gleitsohle 22 zeigt in dem zweiten Tragsteg 24 insgesamt vier Öldurchlässe 31, die gleichmäßig über den Umfang des zweiten Tragstegs 24 verteilt angeordnet sind.

Während für den Gleitschuhrohling ein mechanisch hochfestes Material verwendet wird, werden die Unterteilungen aus einem Material angefertigt, welches auch bei Ausbleiben einer Schmierung eine ausreichende Restgleitfähigkeit auf der Gleitfläche 16 der Schrägscheibe 11 sicherstellt. Die Unterteilungen können hierzu z. B. aus den als Lagermaterial bekannten Werkstoffen Sondermessing oder Bronze hergestellt sein. Durch das erfindungsgemäße Verfahren, welches nachfolgend ausführlich beschrieben wird, sind aber auch andere Materialien, vorzugsweise Kunststoffe oder Keramiken, aber auch Nichteisenmetalle auf die Basisfläche 26 des Gleitschuhrohlings aufbringbar.

Das erfindungsgemäße Verfahren zum Ausbilden der Unterteilungen wird nun anhand der schematischen Darstellung in Fig. 4 beschrieben. Ein Gleitschuhrohling 47 wird einer Bearbeitungsstation zugeführt und in eine Aufnahme 40 gespannt. An Stelle des vorstehend beschriebenen Gleitschuhs 15, welcher eine kugelförmige Ausnehmung 17 aufweist, die mit einem kugelförmigen Kopf 14 des Kolbens 8 verbunden wird, ist die Gelenkverbindung bei den nachfolgend beschriebenen Gleitschuhen so ausgestaltet, dass der jeweilige Gleitschuhrohling 47 einen kugelförmigen Gleitschuhkopf 28 aufweist, welcher mit einer korrespondierenden Ausnehmung an den Kolben 8 zu einer Gelenkverbindung zusammenwirkt.

Das nachfolgend beschriebene Verfahren kann an den beiden Gleitebenen des Gleitschuhrohlings 47, also sowohl der Gleitsohle 22, als auch der Ringfläche 29 eingesetzt werden. Die nachfolgenden Ausführungen beschränken sich zunächst auf das Bearbeiten der Gleitsohle 22. Bevor die Unterteilungen auf der Gleitsohle 22 ausgebildet werden können, muss die Basisfläche 26 des Gleitschuhrohlings 47 so vorbereitet werden, dass eine Fläche mit definierter Oberflächengüte entsteht, auf der ein Schweißen oder Löten möglich ist. Dies kann z. B. während der Fertigung des Gleitschuhrohlings 47, wenn der Gleitschuhrohl ings 47 während seiner Herstellung drehbearbeitet wird, oder in einem separaten Arbeitsschritt erfolgen, beispielsweise durch Schleifen.

Der so vorgefertigten Basisfläche 26 wird nun das aufzutragende Material zugeführt. Im Falle eines pulverförmig zuzuführenden Werkstoffs wird hierzu eine in Fig. 4 dargestellte Zuführvorrichtung 36 verwendet. Die Zuführvorrichtung 36 besteht aus einer Düse 37 sowie einem Schaber 38, wobei die Düse 37 und der Schaber 38 miteinander so verbunden sind, dass sie über einen gemeinsamen Arm 39 bewegt werden können. Die Zuführvorrichtung 36 wird nun über die Ebene der Gleitsohle 22 verfahren, wobei gleichzeitig durch die Düse 37 der pulverförmige Werkstoff austritt. In der Zeichnung erfolgt die Bewegung von rechts nach links. Ein Teil des so auf die Basisfläche 26 aufgetragenen Pulvers wird mit Hilfe des Schabers 38 wieder entfernt, so dass eine Pulverschicht 41 erzeugt wird, die eine konstante Dicke aufweist.

Das Ausbilden der mit der Basisfläche 26 fest verbundenen Unterteilungen erfolgt anschließend durch lokales Erwärmen der Pulverschicht 41. Hierzu wird beispielsweise ein Laser verwendet, der über ein Glasfaserkabel 33 mit einer Optik 34 verbunden ist, wobei die Optik 34 mit Hilfe einer nicht dargestellten Führungseinrichtung, z.B. einem Roboter, bewegt werden kann. Aus der Optik 34 tritt ein Laserstrahl 35 aus, so dass mit dem Laserstrahl 35 die Pulverschicht 41 lokal erwärmt wird. Die lokale Erwärmung der Pulverschicht 41 führt zum Entstehen einer Schmelze, die beim Erkalten eine Verbindung mit der Basisfläche 26 eingeht.

Bezogen auf das Beispiel der Gleitsohle 22 aus Fig. 3 wird die Optik 34 relativ zu dem Gleitschuhrohling 47 entlang mehrerer Kreisbahnen bewegt, so dass das in Fig. 3 gezeigte Muster an Unterteilungen entsteht. Zum Erzeugen der Öldurchlässe 30 bzw. 31 ist es ausreichend, wenn an den entsprechenden Stellen kurzfristig die Leistung des Lasers abgeschaltet oder stark reduziert wird.

Das während dieses Aufschmelzvorgangs nicht erwärmte Pulver wird von der Basisfläche 26 des Gleitschuhrohlings 47 mit Hilfe eines nicht dargestellten Gebläses entfernt.

Das abgeblasene Material wird aufgefangen und kann dem Prozess wieder zugeführt werden. Die Unterteilungen, welche nunmehr auf der Basisfläche 26 des Gleitschuhrohlings 47 ausgebildet sind, werden in einem weiteren Verarbeitungsschritt geebnet. Durch das Ebnen, welches beispielsweise durch einem spanenden Prozess oder durch Schleifen erfolgen kann, wird an der Anlagefläche des ersten und zweiten Tragstegs 23 und 24 und des Dichtstegs 25 mit der Gleitfläche 16 der Schrägscheibe 11 eine definierte Rauhtiefe erzeugt.

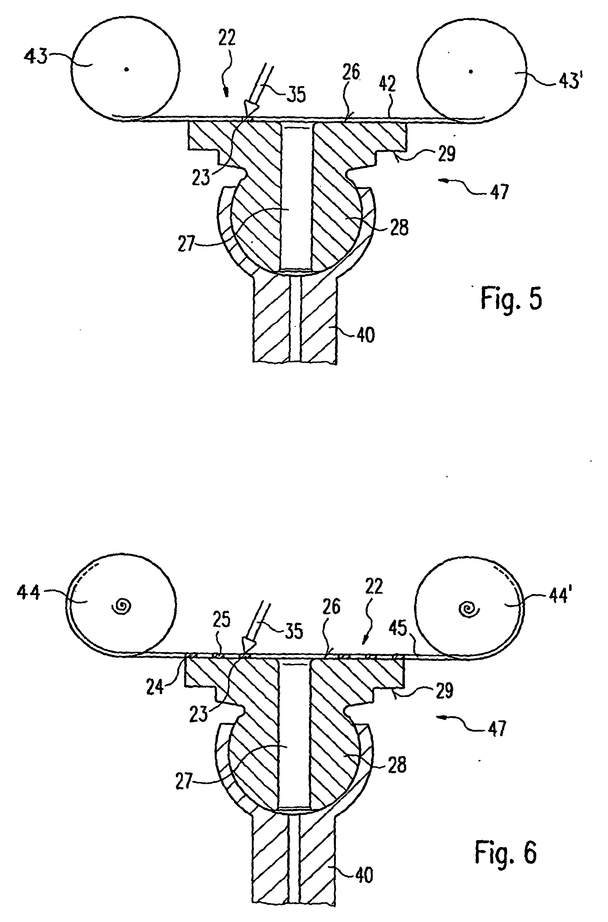

In Fig. 5 ist eine Alternative bezüglich des Zuführens des aufzubringenden Materials dargestellt. An Stelle eines Pulvers wird dabei ein Draht 42 verwendet. Der Draht 42 wird mittels einer Wickelvorrichtung zugeführt, wobei die Wickelvorrichtung aus einer ersten Spule 43 und einer zweiten Spule 43' besteht. Zwischen der ersten Spule 43 und der zweiten Spule 43' ist der Draht 42 frei gespannt, wobei diese freie Drahtlänge unmittelbar über der Basisfläche 26 des Gleitschuhrohlings 47 gehalten wird. Während der Einschaltdauer des Lasers ist durch Abwickeln, des Drahts 42 von der ersten Spule 43 und dem gleichzeitigen Aufwickeln auf die zweite Spule 43' der Draht 42 zu jedem Zeitpunkt gespannt .

Durch den Laserstrahl 35 wird jeweils nur ein Teil des Drahts 42 aufgeschmolzen. Dies kann beispielsweise dadurch erreicht werden, dass der Drahtdurchmesser den Fokusdurchmesser des Laserstrahls 35 übersteigt. Ebenso ist es denkbar, einen Draht 42 zu verwenden, welcher eine Seele mit einem höheren Schmelzpunkt aufweist, so dass lediglich das die Seele umgebende Material aufgeschmolzen wird. Bei der Verwendung eines Drahts 42 und einer Wickelvorrichtung ist es vorteilhaft, wenn die Optik mit der Wickelvorrichtung starr verbunden ist, so dass die relative Lage des Drahts 42 und des Laserstrahls 35 zueinander konstant sind. Zudem wird durch die konstante Orientierung des Laserstrahls 35 hinsichtlich des Aufschmelzpunkts eine hohe Prozesssicherheit erreicht. In diesem Fall werden die Geometrien der Unterteilungen dadurch erzeugt, dass die Aufnahme 40 und mit ihr der Gleitschuhrohling 47 bewegt werden.

In Fig. 6 ist eine ähnliche Anordnung wie in Fig. 5 dargestellt. An Stelle der Spulen 43 und 43' werden für die Wickelvorrichtung eine erste Rolle 44 und eine zweite Rolle 44' verwendet, mit deren Hilfe ein Bandmaterial, beispielsweise eine Metallfolie 45, in unmittelbarer Nähe zu der Basisfläche 26 positioniert wird. Die Fig. 6 zeigt einen späteren Zeitpunkt des Verfahrens, in dem der zweite Tragsteg 24 sowie der Dichtsteg 25 bereits ausgebildet sind. Der Laserstrahl 35 erzeugt gerade den ersten Tragsteg 23. Durch die Verwendung unterschiedlich starker Metallfolien 45 kann die Höhe der Unterteilungen eingestellt werden. Ist die Metallfolie 45 ein schmales Band, welches nur geringfügig breiter ist als der Fokus des Laserstrahls 35, so ist es vorteilhaft, die Wickelvorrichtung und die Optik wiederum fest aneinander zu koppeln und die Geometrien der Unterteilungen dadurch zu erzeugen, dass die Aufnahme 40 relativ dazu bewegt wird.

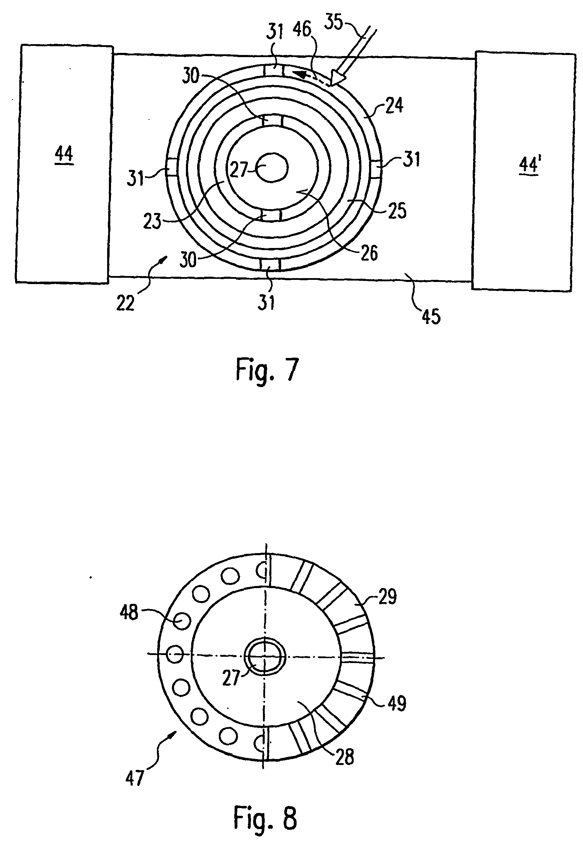

Eine andere Möglichkeit ist in Fig. 7 dargestellt. Die Metallfolie 45 ist breiter als die größte Ausdehnung der Unterteilungen, im dargestellten Beispiel also breiter als der Durchmesser des zweiten Tragstegs 24. Dadurch ist es möglich, auf ein Betätigen der Wickelvorrichtung während des Aufschmelzens zu verzichten. Die Metallfolien 45 sowie die Aufnahme 40 bewegen sich während des Verfahrens nicht. Lediglich die Optik wird, z.B. durch einen Führungsroboter, entlang der aufzubringenden Unterteilungen bewegt, wie dies durch den Pfeil 46 angedeutet ist.

Sind die Unterteilungen auf der Gleitsohle 22 vollständig aufgebracht, so wird in die Aufnahme 40 ein neuer Gleitschuhrohling 47 eingespannt, und die Wickelvorrichtung betätigt, so dass ein unverbrauchter Abschnitt der Metallfolie 45 in Überdeckung mit einer neuen Basisfläche 26 eines Gleitschuhrohlings 47 kommt.

Anstatt einer bandförmigen Endlos-Metallfolie kann die Metallfolie natürlich auch für jeden zu fertigenden Gleitschuh vereinzelt sein und plättchenartig auf den Gleitschuh aufgelegt werden.

In Fig. 8 sind verschiedene Unterteilungen dargestellt, die auf der Ringfläche 29 des Gleitschuhrohlings 47 mit dem erfindungsgemäßen Verfahren ausgebildet werden können. Die Unterteilungen können näherungsweise Kreisflächen 48 sein, wie dies in der linken Hälfte der Fig. 8 dargestellt ist. Die Kreisflächen 48 weisen einen Durchmesser auf, der kleiner ist als die Breite der Ringfläche 29.

Eine alternative Ausgestaltung ist in der rechten Hälfte der Fig. 8 dargestellt. An Stelle der Kreisflächen 48 sind hier gerade Stege 49 dargestellt, wobei die geraden Stege 49 etwa in radialer Richtung ausgebildet sind. Die Stege 49 erstrecken sich dabei über die gesamte Breite der Ringfläche 29 und sind ebenfalls gleichmäßig über den Umfang der Ringfläche 29 verteilt.

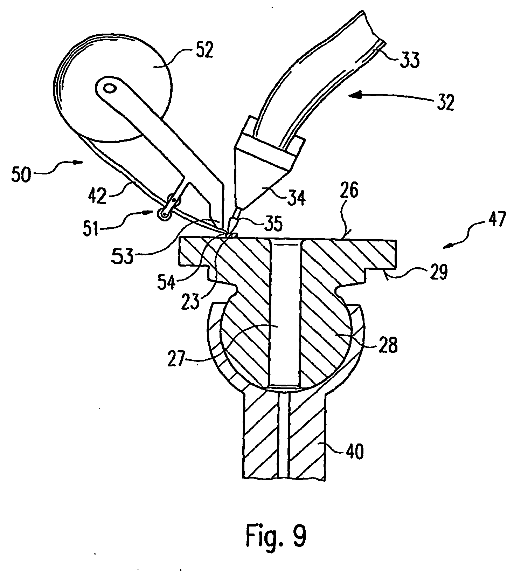

Nach dem in Fig. 9 dargestellten Ausführungsbeispiel ist eine weitere Zuführvorrichtung 50 vorgesehen, durch welche der Draht 42 direkt in den Laserstrahl 35 oder in dessen unmittelbare Umgebung geführt wird. Die weitere Zuführvorrichtung 50 weist eine Vorschubeinrichtung 51 auf, welche den Draht 42 von einer Drahtspule 52 abwickelt. Die Vorschubeinrichtung 51 kann z. B., wie in der Fig. 9 dargestellt, aus zwei Rollen bestehen, zwischen denen der Draht 42 geführt wird, und von denen zumindest eine Rolle angetrieben ist. Der so geförderte Draht 42 wird durch eine Führungseinrichtung 53 an eine Position geführt, an der der Draht 42 auf die Basisfläche 26 aufgeschmolzen werden soll. Durch eine solche Anordnung wird einerseits aufgrund der größeren Bewegungsfreiheit der Wechsel eines Gleitschuhrohlings 47 vereinfacht, andererseits kann das zugeführte Drahtmaterial vollständig auf die Basisfläche 26 aufgeschmolzen werden, so dass nach dem Aufschmelzen kein überschüssiges Material anfällt. Die weitere Zuführvorrichtung 50 kann ebenfalls an einer gemeinsamen Aufnahme mit der Optik 34 gehalten werden, so dass die relative Position zwischen dem Laserstrahl 35 und einem aufzuschmelzenden Ende 54 des Drahtes 42 während des Prozesses konstant ist.

Das vorstehend ausschließlich am Beispiel der Verwendung eines Laserstrahls 35 beschriebene Ausbilden der Unterteilungen kann auch mit anderen berührungsfreien Verfahren, bei denen lokal ein Wärmeeintrag stattfindet , erfolgen. Als Beispiele sind hier insbesondere ein Plasmastrahl oder ein Elektronenstrahl zu nennen.

## Patentansprüche

1. Verfahren zum Aufbringen von Unterteilungen (23, 24, 25, 48, 49) an einer Gleitebene (22, 29) eines Gleitschuhrohlings (47) mit folgenden Verfahrensschritten:
- Vorfertigen einer Basisfläche (26) der Gleitebene (22, 29) des Gleitschuhrohlings (47);
- Zuführen eines aufzubringenden Materials (41, 42, 45) an die Basisfläche (26);
- lokales Aufschmelzen des zugeführten Materials (41, 42, 45) mittels eines berührungsfreien lokalen Wärmeeintrags (35);
- Erzeugen bestimmter Geometrien der Unterteilungen (23, 24, 25, 48, 49) durch Bewegen des Gleitschuhrohlings (47) und eines Strahls (35) des Wärmeeintrags (34) relativ zueinander; und
- Ebnen der Anlagefläche des aufgeschmolzen Materials (41, 42, 45) zum Erzeugen einer ebenen Anlagefläche der Gleitebene (22, 29).

2. Verfahren zum Aufbringen von Unterteilungen nach Anspruch 1,
**dadurch gekennzeichnet,**
**dass** der Wärmeeintrag berührungsfrei mittels eines Laserstrahls (35) erfolgt.

3. Verfahren zum Aufbringen von Unterteilungen nach Anspruch 1,
**dadurch gekennzeichnet,**
**dass** der Wärmeeintrag berührungsfrei mittels eines Elektronenstrahls erfolgt.

4. Verfahren zum Aufbringen von Unterteilungen nach Anspruch 1,
**dadurch gekennzeichnet,**
**dass** der Wärmeeintrag berührungsfrei mittels eines Plasmastrahls erfolgt.

5. Verfahren zum Aufbringen von Unterteilungen nach einem der Ansprüche 1 bis 4,
**dadurch gekennzeichnet,**
**dass** das aufzubringende Material (41, 42, 45) als Pulver (41) zugeführt wird.

6. Verfahren zum Aufbringen von Unterteilungen nach Anspruch 5,
**dadurch gekennzeichnet**,
das nach dem Aufschmelzen überschüssiges Pulver (41) abgeblasen oder abgeschüttet wird.

7. Verfahren zum Aufbringen von Unterteilungen nach einem der Ansprüche 1 bis 4,
**dadurch gekennzeichnet,**
**dass** das aufzubringende Material (41, 42, 45) als Draht (42) zugeführt wird.

8. Verfahren zum Aufbringen von Unterteilungen nach Anspruch 7,
**dadurch gekennzeichnet,**
**dass** zur Zuführung des Drähtes (42) eine Zuführvorrichtung (50) vorgesehen ist, die ein freies Ende (54) des Drahtes (42) in den Bereich des Wärmeeintrags zuführt.

9. Verfahren zum Aufbringen von Unterteilungen nach Anspruch 7,
**dadurch gekennzeichnet,**
**dass** zur Zuführung des Drahtes (42) eine Wickelvorrichtung (43, 43') vorgesehen ist und im Bereich der von der Wickelvorrichtung (43, 43') gespannten freien Drahtlänge ein Teil des Drahtmaterials (42) aufgeschmolzen wird.

10. Verfahren zum Aufbringen von Unterteilungen nach einem der Ansprüche 1 bis 4,
**dadurch gekennzeichnet,**
**dass** das aufzubringende Material (41,42, 45) als Band (45) zugeführt wird.

11. Verfahren zum Aufbringen von Unterteilungen nach Anspruch 10,
**dadurch gekennzeichnet,**
**dass** zur Führung des Bands (45) eine Wickelvorrichtung (44,44') vorgesehen ist und im Bereich der von der Wickelvorrichtung (44,44') gespannten freien Bandlänge ein Teil des Bandmaterials (45) aufgeschmolzen wird.

12. Verfahren zum Aufbringen von Unterteilungen nach Anspruch 11,
**dadurch gekennzeichnet,**
**dass** die Breite des Bandmaterials (45) größer ist als die maximale Ausdehnung der auszubildenden Unterteilungen (23, 24, 25).

13. Verfahren zum Aufbringen von Unterteilungen nach einem der Ansprüche 1 bis 12,
**dadurch gekennzeichnet,**
**dass** die Unterteilungen (23, 24, 25) auf einer Gleitsohle (22) des Gleitschuhrohlings (47) ausgebildet werden.

14. Verfahren zum Aufbringen von Unterteilungen nach einem der Ansprüche 1 bis 13,
**dadurch gekennzeichnet,**
**dass** die Unterteilungen (48, 49) auf einer einer Gleitsohle (22) entgegengesetzt orientierten Ringfläche (29) des Gleitschuhrohlings (47) ausgebildet werden.

15. Verfahren zum Aufbringen von Unterteilungen nach einem der Ansprüche 1 bis 14,
**dadurch gekennzeichnet,**
**dass** das aufzubringende Material (41, 42, 45) ein Kunststoff ist.

16. Verfahren zum, Aufbringen von Unterteilungen nach einem der Ansprüche 1 bis 14,
**dadurch gekennzeichnet,**
**dass** das aufzubringende Material (41, 42, 45) ein Nichteisenmetall ist.

17. Verfahren zum Aufbringen von Unterteilungen nach einem der Ansprüche 1 bis 14,
**dadurch gekennzeichnet,**
**dass** das aufzubringende Material (41, 42, 45) eine Keramik ist.

18. Gleitschuh einer hydrostatischen Kolbenmaschine, wobei der Gleitschuh (15) zumindest eine Gleitebene (22, 29) aufweist, auf der Unterteilungen (23, 24, 25, 48, 49) als Erhebungen angeordnet sind,
**dadurch gekennzeichnet,**
**dass** die Unterteilungen (23, 24, 25, 48, 49) durch ein lokales, mittels eines berührungsfreien Wärmeeintrags erzeugtes Aufschmelzen eines zugeführten Materials (41, 42, 45) ausgebildet sind und das zugeführte Material dauerhaft als Löt- oder Schweißverbindung fixiert ist.

## Claims

1. Method for applying divisions (23, 24, 25, 48, 49) to a slide plane (22, 29) of a glide block blank (47), comprising the following process steps:
- prior fabrication of a base surface (26) of the slide plane (22, 29) of the guide block blank (47);
- supply of a material to be applied (41, 42, 45) to the base surface (26);
- local fusion of the material (41, 42, 45) supplied by means of a local non-contact heat input (35);
- production of specific geometries of the divisions (23, 24, 25, 48, 49) by moving the guide block blank (47) and a beam (35) of the heat input (34) relative to one another; and
- levelling of the abutment face of the fused material (41, 42, 45) to produce a flat abutment face of the slide plane (22, 29).

2. Method for applying divisions according to claim 1, **characterised in that** the heat input takes place in a non-contact manner by means of a laser beam (35).

3. Method for applying divisions according to claim 1, **characterised in that** the heat input takes place in a non-contact manner by means of an electron beam.

4. Method for applying divisions according to claim 1, **characterised in that** the heat input takes place in a non-contact manner by means of a plasma beam.

5. Method for applying divisions according to any one of claims 1 to 4, **characterised in that** the material (41, 42, 45) to be applied is supplied as a powder (41).

6. Method for applying divisions according to claim 5, **characterised in that** the excess powder (41) after fusion is blown or poured off.

7. Method for applying divisions according to any one of claims 1 to 4, **characterised in that** the material (41, 42, 45) to be applied is supplied as wire (42).

8. Method for applying divisions according to claim 7, **characterised in that** for supplying the wire (42) a feed device (50) which feeds a free end (54) of the wire (42) to the area of the heat input is provided.

9. Method for applying divisions according to claim 7, **characterised in that** a winding device (43, 43') is provided for supplying the wire (42) and a part of the wire material (42) is fused on in the area of the free length of wire stretched by the winding device (43, 43').

10. Method for applying divisions according to any one of claims 1 to 4, **characterised in that** the material (41, 42, 45) to be applied is supplied as strip (45).

11. Method for applying divisions according to claim 10, **characterised in that** a winding device (44, 44') is provided for feeding the strip (45) and a part of the strip material (45) is fused on in the area of the free length of strip stretched by the winding device (44, 44').

12. Method for applying divisions according to claim 11, **characterised in that** the width of the strip material (45) is greater than the maximum extension of the divisions (23, 24, 25) to be formed.

13. Method for applying divisions according to any one of claims 1 to 12, **characterised in that** the divisions (23, 24, 25) are formed on a slide face (22) of the guide block blank (47).

14. Method for applying divisions according to any one of claims 1 to 13, **characterised in that** the divisions (48, 49) are formed on an annular face (29) of the guide block blank (47) oriented oppositely to a slide face (22).

15. Method for applying divisions according to any one of claims 1 to 14, **characterised in that** the material (41, 42, 45) to be applied is a plastics material.

16. Method for applying divisions according to any one of claims 1 to 14, **characterised in that** the material (41, 42, 45) to be applied is a non-ferrous metal.

17. Method for applying divisions according to any one of claims 1 to 14, **characterised in that** the material (41, 42, 45) to be applied is a ceramic material.

18. Guide block of a hydrostatic piston machine, the guide block (15) having at least one slide plane (22, 29) on which divisions (23, 24, 25, 48, 49) are arranged as elevations, **characterised in that** the divisions (23, 24, 25, 48, 49) are formed by local fusion of a supplied material (41, 42, 45) generated by means of a non-contact heat input, and the supplied material is permanently fixed as a soldered or welded joint.

## Revendications

1. Procédé pour appliquer des subdivisions (23, 24, 25, 48, 49) sur un plan de glissement (22, 29) d'une ébauche de patin de guidage (47), comprenant les étapes suivantes :
- on préusine une surface de base (26) sur le plan de glissement (22, 29) de l'ébauche de patin de guidage (47);
- on alimente un matériau à appliquer (41, 42, 45) vers la surface de base (26) ;
- on fait fondre localement le matériau alimenté (41, 42, 45) au moyen d'un apport de chaleur (35) local sans contact physique;
- on réalise des géométries déterminées des subdivisions (23, 24, 25, 48, 49) par déplacement de l'ébauche de patin de guidage (47) et d'un faisceau (35) de l'apport de chaleur (34) l'un par rapport à l'autre; et
- on aplanit la surface d'appui du matériau fondu (41, 42, 45) pour réaliser une surface d'appui plane du plan de glissement (22, 29).

2. Procédé pour appliquer des subdivisions selon la revendication 1,
**caractérisé en ce que**
l'apport de chaleur s'effectue sans contact physique au moyen d'un rayon laser (35).

3. Procédé pour appliquer des subdivisions selon la revendication 1,
**caractérisé en ce que**
l'apport de chaleur s'effectue sans contact physique au moyen d'un faisceau électronique.

4. Procédé pour appliquer des subdivisions selon la revendication 1,
**caractérisé en ce que**
l'apport de chaleur s'effectue sans contact physique au moyen d'un faisceau de plasma.

5. Procédé pour appliquer des subdivisions selon l'une des revendications 1 à 4,
**caractérisé en ce que**
on alimente le matériau à appliquer (41, 42, 45) sous forme de poudre (41).

6. Procédé pour appliquer des subdivisions selon la revendication 5,
**caractérisé en ce que**
on enlève par soufflage ou par versement la poudre excédentaire (41) après la mise en fusion.

7. Procédé pour appliquer des subdivisions selon l'une des revendications 1 à 4,
**caractérisé en ce que**
on alimente le matériau à appliquer (41, 42, 45) sous forme de fil métallique (42).

8. Procédé pour appliquer des subdivisions selon la revendication 7,
**caractérisé en ce que**
pour alimenter le fil métallique (42), il est prévu un dispositif d'alimentation (50) qui alimente une extrémité libre (54) du fil métallique (42) jusque dans la zone de l'apport de chaleur.

9. Procédé pour appliquer des subdivisions selon la revendication 7,
**caractérisé en ce que**
pour alimenter le fil métallique (42), il est prévu un dispositif d'enroulement (43, 43'), et **en ce que** dans la zone de la longueur de fil libre tendue par le dispositif d'enroulement (43, 43') on fait fondre une partie du matériau en fil (42).

10. Procédé pour appliquer des subdivisions selon l'une des revendications 1 à 4,
**caractérisé en ce que**
on alimente le matériau à appliquer (41, 42, 45) sous forme de bande (45).

11. Procédé pour appliquer des subdivisions selon la revendication 10, **caractérisé en ce que** pour guider la bande (45), il est prévu un dispositif d'enroulement (44, 44'), et **en ce que** dans la zone de la longueur de bande libre tendue par le dispositif d'enroulement (44, 44') on fait fondre une partie du matériau en bande (45).

12. Procédé pour appliquer des subdivisions selon la revendication 11,
**caractérisé en ce que**
la largeur du matériau en bande (45) est supérieure à l'extension maximale des subdivisions à réaliser (23, 24, 25).

13. Procédé pour appliquer des subdivisions selon l'une des revendications 1 à 12,
**caractérisé en ce que**
on réalise les subdivisions (23, 24, 25) sur une semelle de glissement (22) de l'ébauche de patin de guidage (47).

14. Procédé pour appliquer des subdivisions selon l'une des revendications 1 à 13,
**caractérisé en ce que**
on réalise les subdivisions (48, 49) sur une surface annulaire (29) de l'ébauche de patin de guidage (47), surface qui est orientée à l'opposé d'une semelle de glissement (22).

15. Procédé pour appliquer des subdivisions selon l'une des revendications 1 à 14,
**caractérisé en ce que**
le matériau à appliquer (41, 42, 45) est une matière plastique.

16. Procédé pour appliquer des subdivisions selon l'une des revendications 1 à 14,
**caractérisé en ce que**
le matériau à appliquer (41,42,45) est un métal non ferreux.

17. Procédé pour appliquer des subdivisions selon l'une des revendications 1 à 14,
**caractérisé en ce que**
le matériau à appliquer (41, 42, 45) est une céramique.

18. Patin de guidage d'une machine à pistons hydrostatique, le patin de guidage (15) présentant au moins un plan de glissement (22, 29) sur lequel sont agencées des subdivisions (23, 24, 25, 48, 49) sous forme de surélévations,
**caractérisé en ce que**
les subdivisions (23, 24, 25, 48, 49) sont réalisées par mise en fusion locale d'un matériau alimenté (41, 42, 45) provoquée par apport de chaleur sans contact physique, et **en ce que** le matériau alimenté est fixé à demeure à titre de liaison brasée ou soudée.
